# EUROPÄISCHE PATENTANMELDUNG

(11) **EP 4 333 364 A1**
(43) Veröffentlichungstag der Anmeldung: **06.03.2024**
(21) Anmeldenummer: 22193115.7
(22) Anmeldetag: 31.08.2022
(51) Int. Cl.: H04L 9/32

(54) **VERFAHREN ZUR ÜBERWACHUNG EINES COMPUTERIMPLEMENTIERTEN KOMPONENTENINVENTARS**

(71) Anmelder: Siemens Aktiengesellschaft, 80333 München (DE)
(72) Erfinder: Palmin, Anna, 76187 Karlsruhe (DE)
(74) Vertreter: Siemens Patent Attorneys

(57) **Zusammenfassung**

Vorgeschlagen wird ein Verfahren zum Überwachen eines computerimplementierten Komponenteninventars (3) für eine technische Anlage, umfassend:
a) Festlegen von Regeln und Hinterlegen der Regeln in einem computerimplementierten Regelspeicher (1),
b) Überwachen des computerimplementierten Komponenteninventars (3) für die technischen Anlage, wobei in dem computerimplementierten Komponenteninventar (3) Informationen über Anlagenkomponenten (4) der technischen Anlage, vorzugsweise bezüglich den Anlagenkomponenten (4) zugeordneter Zertifikate, hinterlegt sind, hinsichtlich eines Auftretens einer Änderung,
c) In Abhängigkeit der festgelegten und in dem computerimplementierten Regelspeicher (1) hinterlegten Regeln, Bewerten, ob die Änderung relevant ist,
d) Für den Fall, dass die Änderung als relevant bewertet wurde, Erzeugen wenigstens einer Meldung,
e) Versenden der Meldung an eine, von dem computerimplementierten Komponenteninventar (3) verschiedene Instanz (7, 8, 9) .

## Beschreibung

Die Erfindung betrifft ein Verfahren zur Überwachung eines computerimplementierten Komponenteninventars. Außerdem betrifft die Erfindung ein computerimplementiertes Komponenteninventar und ein System.

Gemäß den Anforderungen der Norm IEC 62443-3-3 soll jedes Automatisierungssystem fähig sein, ein zentrales computerimplementiertes Geräteinventar (engl. Inventory) als eine laufende Liste aller installierten Komponenten mit ihren jeweiligen Merkmalen (u.a. deren IDs) als Basis für einen Konfigurationsverwaltungsprozess automatisiert zu erstellen. Die Betreiber der industriellen IoT- und OT-Anlagen streben zunehmend nach einem derartigen zentralen Geräteinventar.

Ferner ist ein derartiges Geräteinventar auch im Zero Trust-Kontext unabdingbar (siehe dazu NIST-800-207). In diesem Kontext wird ein solches anlagenweites Inventar auch als ein sog. Central Endpoint Registry bezeichnet. Die aktuell zur automatisierten Erfassung der OT-Komponenten bereits eingesetzten Tools (z.B. Anomaly Detection, Discovery Tools) können u.a. die Zugehörigkeit der OT-Komponenten zu deren Herstellern (z.B. anhand der MAC-Adresse) ermitteln. Ein "Fake"-Gerät könnte jedoch unter Verwendung der (z.B. aus der Dokumentation entnommenen) MAC-Adresse eines Originalgerätes als das Originalgerät in ein Geräteinventar aufgenommen werden und anschließend ggf. den Betrieb des Automatisierungssystems gefährden.

In der WO 2022/028975 A1 sind ein System und ein Prozess zum sicheren und dynamischen Aufbau eines Geräteinventars aus OT-Komponenten einer heterogenen OT-Anlage im Einklang mit dem Zero Trust Prinzip "Never trust, always verify" offenbart. Dabei wird die Erfassung der OT-Komponenten (die aktuell manuell und/oder unter Verwendung der state-of-the Art Discovery Mechanismen erfolgt) durch die automatisierte Verifikation der Identität/Originalität der Komponenten anhand deren vom Hersteller ausgestellten Zertifikate (der sog. IDevID-Zertifikate nach IEEE 802.1AR) erweitert. Derartige MDC-/IDevID-Zertifikate sind an die zugehörigen (in den OT-Komponenten sicher hinterlegten) privaten Schlüssel (die sog. Secrets nach IEEE 802.1AR) gebunden. Die verifizierten Zertifikate und der Status der Verifikation einschl. des Zeitstempels werden neben anderen Merkmalen der Komponenten (z.B. IDs) im Inventory hinterlegt und dienen als Basis für weitere Aktionen und Entscheidungen.

Eine erfolgreiche Originalitätsprüfung/Registrierung eines Gerätes im Central Data Registry/Inventory wird von dem jeweiligen Tool, das die Prüfung durchgeführt hat (e.g. Anomaly Detection Tool), an ein SIEM-System gemeldet (SIEM = Security Information and Event Management). In der WO 2022/028975 A1 ist weiterhin beschrieben, dass auch eine fehlgeschlagene Originalitätsprüfung von dem o.g. Tool an ein SIEM-System gemeldet wird. Zu diesem Zweck können beispielsweise folgende Meldungen verwendet werden:
a) "Device "Industrial Controller 1" with ID XYZ has successfully provided a proof of originality."
b) "The proof of originality provided by the device "Industrial Controller 1" with ID XYZ failed."

Die Übermittlung der genannten Meldungen erweist sich aus verschiedenen Security-relevanten Gründen als sinnvoll: Insbesondere kann das SIEM-System unter Berücksichtigung dieser Meldungen ein Gerät, das seine Originalität erfolgreich bewiesen hat, (beispielsweise anhand der von diesem Gerät im weiteren Lebenszyklus abgesetzten Events) als ein vertrauenswürdiges Gerät überwachen und dabei möglicherweise andere Regeln anwenden als bei einem Gerät, dessen Originalitätsprüfung fehlgeschlagen ist.

In einer heterogenen technischen (industriellen) Anlage können mehrere unterschiedliche Tools zur Identitäts-/Originalitätsprüfung und somit zur Provisionierung/ Registrierung von Anlagenkomponenten sowie zur Zertifikatserneuerung und/oder Revokation und/oder zur Deprovisionierung von Anlagenkomponenten - ggf. in verschiedenen Lebenszyklus-Phasen - eingesetzt werden. Sollen beispielsweise an ein SIEM-System alle Ereignisse in Verbindung mit dem sog. LDevID-Generic-Zertifikat einer Anlagenkomponente gemeldet werden, so wird das Generieren und das Anlegen dieses Zertifikats im Registry/Inventory ggf. von dem jeweiligen Registrar (z.B. dem BRSKI-Registrar) gemeldet, während eine direkt über die Registration Authority (Registrierungsstelle) durchgeführte Erneuerung oder Revokation dieses Zertifikat von der Registration Authority gemeldet werden soll (weil der o.g. Registrar an diesem Vorgang nicht beteiligt ist).

Ferner kann ein IAM-Service (IAM = Identity und Access Management), beispielsweise von einem OPC UA Part 21-Registrar über die erfolgte Originalitätsprüfung/ Registrierung der OPC UA-Geräte, oder von einem BRSKI-Registrar über die erfolgreiche Originalitätsprüfung/ Registrierung der Geräte, die das Zero Touch Onboarding nach BRSKI unterstützten, informiert werden.

Dabei legen diese beiden Instanzen als Ergebnis der Originalitätsprüfung/Registrierung einen entsprechenden Registry/Inventory-Eintrag für die erfolgreich registrierte Komponente an, fügen das ausgestellte LDevID-Generic-Zertifikat hinzu und nutzen die gleiche Schnittstelle oder ggf. (sogar) unterschiedliche Schnittstellen zum IAM-Service, um diesen über die erfolgreiche Registrierung zu informieren.

Der bekannte, oben beschriebene Ansatz hat zur Folge, dass alle verwendeten Tools eine Schnittstelle und eine (beispielsweise zertifikatsbasierte) Vertrauensbeziehung zu den in der jeweiligen IIoT-/OT-Anlage eingesetzten anderen Tools (wie z.B. SIEM-/IAM-Systemen) und/oder entsprechenden Services benötigen. Da die Tools ggf. von verschiedenen Herstellern kommen bzw. produktfamilienspezifisch sind, ist in der Regel ein sehr hoher Aufwand zur Implementierung der Regeln, anhand welcher entschieden werden soll, welche Meldungen und aufgrund welcher Ereignisse und an welche weitere Tools / Services übermittelt werden sollen, in den einzelnen verwendeten Tools/Services (und folglich ggf. in mehreren verschiedenen Programmiersprachen) erforderlich.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Vielzahl an Zertifizierungsstellen.

Die EP 3 287 925 A1 offenbart eine Computervorrichtung zum Übertragen eines Zertifikats auf ein Gerät in einer Anlage.

In der WO 2020/078750 A1 ist ein Verfahren zum sicheren Betreiben eines industriellen Automatisierungsgeräts in einem Automatisierungssystem offenbart. Im Rahmen dessen wird eine Registrierungsstelle zum Entgegennehmen und Weiterleiten von Zertifikatsanträgen beschrieben.

Der Erfindung liegt die Aufgabe zugrunde, eine sicherheitsbezogene Verwaltung von Anlagenkomponenten einer technischen Anlage zu vereinfachen und deren Effizienz zu steigern.

Diese Aufgabe wird gelöst durch ein Verfahren mit den Merkmalen des Anspruchs 1. Zudem wird die Aufgabe gelöst durch ein System mit den Merkmalen des Anspruchs 14. Zudem wird die Aufgabe gelöst durch ein computerimplementiertes Komponenteninventar gemäß Anspruch 15. Vorteilhafte Weiterbildungen ergeben sich aus den abhängigen Ansprüchen.

Ein erfindungsgemäße Verfahren zum Überwachen eines Komponenteninventars für eine technische Anlage umfasst die folgenden Schritte:
a) Festlegen von Regeln und Hinterlegen der Regeln in einem computerimplementierten Regelspeicher,
b) Überwachen eines Komponenteninventars für die technischen Anlage, wobei in dem zentralen Komponenteninventar Informationen über Anlagenkomponenten der technischen Anlage, vorzugsweise bezüglich den Anlagenkomponenten zugeordneten Zertifikaten, hinterlegt sind, hinsichtlich eines Auftretens einer Änderung,
c) In Abhängigkeit der festgelegten und in dem Regelspeicher hinterlegten Regeln, Bewerten, ob die Änderung relevant ist,
d) Für den Fall, dass die Änderung als relevant bewertet wurde, Erzeugen wenigstens einer Meldung,
e) Versenden der Meldung an eine, von dem zentralen Komponenteninventar verschiedene Instanz.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei den Anlagenkomponente der technischen Anlage kann es sich um beliebige Geräte oder computerimplementierte Applikationen handeln. Anlagenkomponenten der technischen Anlage können beispielsweise Vorrichtungen wie Pumpen, Ventile, Motoren, Heizkessel und dergleichen, aber auch Softwareprogramme sein.

In dem (computerimplementierten) Komponenteninventar der technischen Anlage sind die verschiedenen Anlagenkomponenten der technischen Anlage hinterlegt bzw. registriert. Dabei können zu jeder Anlagenkomponente Informationen wie eine Identität, eine Versionierung ihrer Firmware, Schnittstellen, verwendete Zertifikate und dergleichen in dem Komponenteninventar hinterlegt sein. Das computerimplementierte Komponenteninventar kann als eine dedizierte Instanz in der technischen Anlage, als Teil einer Registrierungsstelle der technischen Anlage oder in einer Cloud, welche mit der technischen Anlage verbunden ist, ausgebildet sein.

Im Rahmen eines erfindungsgemäßen Verfahrens wird das Inventar hinsichtlich des Auftretens einer Änderung überwacht. Diese Überwachung kann von einem Überwachungsdienst vorgenommen werden, welcher auf demselben Computer wie das Komponenteninventar implementiert ist. Bei dem Computer kann es sich beispielsweise um einen Operator Station Server eines Leitsystems der technischen Anlage handeln. Der Überwachungsdienst kann die Überwachung aber auch mittels eines Fernzugriffes, beispielsweise aus einer cloudbasierten Infrastruktur heraus, vornehmen. Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der verfahrenstechnischen Anlage und zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Ein Gegenstand der festgelegten und in dem computerimplementierten Regelspeicher hinterlegten Regeln ist ein Bewertungsmaßstab für die Beurteilung einer Relevanz einer aufgetretenen Änderung. Mit anderen Worten wird in den Regeln festgelegt, welche Art von Änderung, welcher Grad oder sonstige Eigenschaften der Änderung als relevant erachtet werden. Wenn die Änderung unter Einbezug der Regeln als relevant erachtet wurde, wird, beispielsweise durch den Überwachungsdienst oder einen mit diesem kommunikativ verbundenen Dienst, eine Meldung erzeugt.

Die erzeugte Meldung wird daraufhin an eine, von dem computerimplementierten Komponenteninventar verschiedene Instanz versendet. Diese Instanz kann dann die Meldung archivieren und/oder nachfolgende Schritte als Reaktion auf die festgestellte Änderung des Komponentenarchivs triggern. Insbesondere kann die Instanz eine Schnittstelle zu einem Operator/Nutzer/Administrator der technischen Anlage realisieren, um eine adäquate Reaktion auf die in dem Komponenteninventar zu ermöglichen bzw. zu triggern.

Durch die Anwendung eines erfindungsgemäßen Verfahrens ergibt sich der gewichtige Vorteil, dass beispielsweise eine Registrierung einer Anlagenkomponente in einer jeweiligen heterogenen IIoT-/OT-Einsatzumgebung, als Beispiel für eine relevante Änderung in dem Komponenteninventar, automatisiert eine Benachrichtigung der relevanten Instanz in Form einer Meldung mit sich bringt. Wird beispielsweise ein Service, der auf einem Endpoint bzw. einer Anlagenkomponente läuft, registriert (was beispielsweise darauf hindeuten kann, dass ein entsprechendes applikationsspezifisches Zertifikat "LDevID-App Cert." für diesen Service erfolgreich beantragt und ausgestellt wird), so wird die relevante Instanz auf eine einheitliche Art und Weise darüber informiert.

Die Meldung kann (mit identischem Aufbau und Inhalt) auch an eine Mehrzahl von Instanzen, die von dem computerimplementierten Komponenteninventar verschieden sind, versendet werden, wobei sich die Meldungen aber auch (hinsichtlich Inhalt und Aufbau) voneinander unterscheiden können. Dadurch kann auf die spezifischen Anforderungen der einzelnen Instanzen, beispielsweise hinsichtlich Format und Inhalt der jeweiligen Meldung gezielt eingegangen werden.

Bevorzugt erfolgt das Festlegen der Regeln im Rahmen einer Projektierung einer Automatisierung der technischen Anlage. Dabei wird unter einer Automatisierung die selbständige (automatisierte) Erfassung und Beeinflussung physikalischer Größen mithilfe technischer Mittel verstanden. Dabei werden in der Regel Maschinen, Anlagen oder sonstige Einrichtungen in die Lage versetzt, selbsttätig zu arbeiten. Die Automatisierung der technischen Anlage umfasst wenigstens eine Parametrierung der Anlagenkomponenten und eine Interaktion der Anlagenkomponenten mit weiteren (Anlagen-)Komponenten.

Zu einer Laufzeit der technischen Anlage, also während diese betrieben wird, kann eine Überarbeitung der zuvor festgelegten Regeln erfolgen. Dadurch kann auf sich ändernde Bedingungen in der technischen Anlage reagiert werden. Das Festlegen der Regeln kann aber auch ausschließlich zu der Laufzeit der technischen Anlage erfolgen.

Sowohl das erstmalige Festlegen der Regeln als auch die Überarbeitung der zuvor festgelegten Regeln zu einer Laufzeit der technischen Anlage können dabei manuell und/oder unter Verwendung eines maschinellen Lernens erfolgen.

Eine relevante Änderung können eine Aufnahme einer neuen Anlagenkomponente in das computerimplementierte Komponenteninventar eine relevante Änderung darstellen. Auch eine Aufnahme, eine Revokation oder eine Aktualisierung eines zu einer Anlagenkomponente gehörigen Zertifikats in das computerimplementierte Komponenteninventar kann eine relevante Änderung darstellen. Dabei wird unter einem Zertifikat ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden. Ein Zertifikat wird für den Einsatz einer Anlagenkomponente in der technischen Anlage von einer Zertifizierungsstelle ausgestellt, die auch als eine sogenannte "Issuing CA (Certification Authority)" bezeichnet wird. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden.

Die Instanz bzw. die Instanzen, an die die Meldung bzw. die Meldungen versendet werden, können in den festgelegten Regeln enthalten sein. Dabei können diese Informationen manuell Teil der Regeln geworden sein und/oder unter Zuhilfenahme eines maschinellen Lernens.

Die Instanz (oder die Instanzen) kann als ein IAM- oder ein SIEM-System, oder als ein IAM- oder ein SIEM-Dienst ausgebildet sein.

In den Regeln kann bestimmt sein, welchen Inhalt und/oder welches Format die Meldung (bzw. die Meldungen) aufweisen. Dadurch kann gezielt auf die Anforderungen bestimmter Instanzen eingegangen werden.

Die zuvor formulierte Aufgabe wird außerdem gelöst durch System, umfassend:
- ein erster Teil, der dazu ausgebildet ist, ein Komponenteninventar für eine technischen Anlage, wobei in dem computerimplementierten Komponenteninventar Informationen über Anlagenkomponenten der technischen Anlage hinterlegt sind, hinsichtlich eines Auftretens einer Änderung zu überwachen,
- ein zweiter Teil, der dazu ausgebildet ist, in Abhängigkeit von zuvor festgelegten Regeln, zu bewerten, ob die Änderung relevant ist,
- ein dritter Teil, der dazu ausgebildet ist, für den Fall, dass die Änderung von dem zweiten Teil als relevant bewertet wurde, wenigstens eine Meldung zu erzeugen,
- ein vierter Teil, der dazu ausgebildet ist, die Meldung an eine, von dem computerimplementierten Komponenteninventar verschiedene Instanz zu versenden.

Die zuvor formulierte Aufgabe wird zudem gelöst durch ein computerimplementiertes Komponenteninventar für eine technische Anlage mit einem System, das wie zuvor erläutert ausgebildet ist.

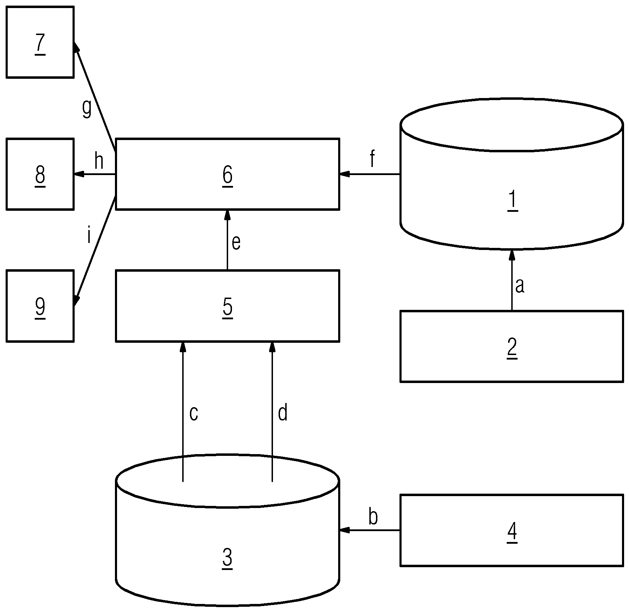

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

Im Folgenden wird ein erfindungsgemäßes Verfahren erläutert: Im Zuge einer Projektierung einer Automatisierung einer technischen Anlage werden von einem Konfigurationsdienst 2 der technischen Anlage Regeln festgelegt und in einem Regelspeicher 1 der technischen Anlage hinterlegt (Schritt a). Hierzu kann der Konfigurationsdienst 2 beispielsweise auf eine IT/OT-Konfiguration der technischen Anlage, Produktinformation von in der Anlage verwendeten Anlagenkomponenten, maschinelles Lernen oder auf manuelle Vorgaben eines Projekteurs der technischen Anlage zugreifen. Der Vorgang kann vollständig automatisiert oder teilautomatisiert (auf Initiierung durch den Projekteur) durchgeführt werden.

Die Regeln können dabei, wie im weiteren Verlauf noch detailliert erläutert wird,
- zur Bestimmung, ob eine Änderung in einem Komponenteninventar der technischen Anlage als relevant für die Generierung einer Meldung oder mehrerer Meldungen erachtet wird,
- zur Bestimmung der Instanz(en), an die die Meldung bzw. die Meldungen übermittelt werden sollen,
- zur Bestimmung der Inhalte und des Formats der Meldung, sowie
- zur Bestimmung der Schnittstelle (wie z.B. REST, SOAP) und/oder des Kommunikationsprotokolls, die zur Übermittlung der Meldung an die o.g. Instanz(en) verwendet werden.

In einem darauffolgenden Schritt (Schritt b) wird in einem in der Figur dargestellten Komponenteninventar 3 eine Anlagenkomponente 4 registriert. Die Registrierung/Anlage der Anlagenkomponente 4 in dem Komponenteninventar 3 kann manuell durch einen Benutzer oder automatisiert unter Verwendung eines Tools, z.B. eines "Anomaly Detection Tools" (vgl. hierzu die Offenbarung der WO 2022/028975 A1) oder eines Registrars (beispielsweise eines Registrars nach OPC UA Part 21 oder nach BRSKI) erfolgen.

Ein Überwachungsdienst 5 erkennt die in dem Komponenteninventar 3 vorgenommene Änderung (Schritt c). Hierzu kann der Überwachungsdienst 5 eine Nachricht von dem Komponenteninventar 3 über die vorgenommene Änderung erhalten. Der Überwachungsdienst 5 kann aber auch in regelmäßigen Abständen beim Komponenteninventar etwaige erfolgte Änderungen aktiv abfragen.

Zusätzlich zu der Registrierung der Anlagenkomponente 4 wird im vorliegenden Ausführungsbeispiel ein sogenanntes LDevID-Zertifikat angelegt. Die Anlage kann dabei manuell durch einen Benutzer oder automatisiert, unter Verwendung eines entsprechenden Dienstes wie eines Registrars, erfolgen. Auch diese Änderung wird dem Überwachungsdienst 5 bekannt gemacht (Schritt d).

In beiden Fällen ermittelt der Überwachungsdienst 5 bestimmte Daten aus dem Komponenteninventar 3. Bei diesen Daten kann es sich um eine IP-Adresse, einen Namen, einen Hersteller, einen Zertifikatstyp sowie vergleichbare Daten der neu in das Komponenteninventar 3 aufgenommenen Anlagenkomponente 4 handeln.

In einem darauffolgenden Schritt (Schritt e) übermittelt der Überwachungsdienst 5 die von dem Komponenteninventar 3 erhaltenen Daten an einen Meldungsdienst 6. Getriggert durch die von dem Überwachungsdienst 5 erhaltenen Daten greift der Meldungsdienst 6 auf den Meldungsspeicher 1 zu und ruft die zuvor festgelegten Regeln ab (Schritt f). Der Meldungsdienst 6 bewertet eine Relevanz der von dem Überwachungsdienst 5 übermittelten Daten bezüglich einer Änderung des Komponenteninventars 3, wobei der die zuvor festgelegten Regeln zur Bewertung der Relevanz hinzuzieht.

Stellt der Meldungsdienst 6 fest, dass es sich bei der Aufnahme der neuen Anlagenkomponente 4 bzw. der Aufnahme des LDevID-Zertifikats um eine relevante Änderung handelt, ermittelt der Meldungsdienst 6 anhand der abgerufenen Regeln, an welche Instanz eine entsprechende Meldung versendet werden soll.

Im vorliegenden Ausführungsbeispiel wird eine erste Meldung an einen SIEM-Service 7 (Schritt g), eine zweite Meldung an einen IAM-Service 8 (Schritt h) und eine dritte Meldung an eine Benutzerapplikation 9 (Schritt i) versendet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Überwachen eines computerimplementierten Komponenteninventars (3) für eine technische Anlage, umfassend:
a) Festlegen von Regeln und Hinterlegen der Regeln in einem computerimplementierten Regelspeicher (1),
b) Überwachen des computerimplementierten Komponenteninventars (3) für die technischen Anlage, wobei in dem computerimplementierten Komponenteninventar (3) Informationen über Anlagenkomponenten (4) der technischen Anlage, vorzugsweise bezüglich den Anlagenkomponenten (4) zugeordneter Zertifikate, hinterlegt sind, hinsichtlich eines Auftretens einer Änderung,
c) In Abhängigkeit der festgelegten und in dem computerimplementierten Regelspeicher (1) hinterlegten Regeln, Bewerten, ob die Änderung relevant ist,
d) Für den Fall, dass die Änderung als relevant bewertet wurde, Erzeugen wenigstens einer Meldung,
e) Versenden der Meldung an eine, von dem computerimplementierten Komponenteninventar (3) verschiedene Instanz (7, 8, 9) .

2. Verfahren nach Anspruch 1, bei dem jeweils eine Meldung an eine Mehrzahl von Instanzen (7, 8, 9), die von dem computerimplementierten Komponenteninventar (3) verschieden sind, versendet wird, wobei sich die Meldungen vorzugsweise voneinander unterscheiden.

3. Verfahren nach Anspruch 1 oder 2, bei dem das Festlegen der Regeln im Rahmen einer Projektierung einer Automatisierung der technischen Anlage erfolgt.

4. Verfahren nach Anspruch 3, wobei zu einer Laufzeit der technischen Anlage eine Überarbeitung der zuvor festgelegten Regeln erfolgt.

5. Verfahren nach Anspruch 1 oder 2, bei dem das Festlegen der Regeln ausschließlich zu einer Laufzeit der technischen Anlage erfolgt.

6. Verfahren nach Anspruch 4 oder 5, bei dem das erstmalige Festlegen der Regeln oder die Überarbeitung der zuvor festgelegten Regeln zu einer Laufzeit der technischen Anlage unter Verwendung eines maschinellen Lernens erfolgt.

7. Verfahren nach einem der vorangegangenen Ansprüche, bei dem eine Aufnahme einer neuen Anlagenkomponente (4) in das computerimplementierte Komponenteninventar (3) eine relevante Änderung darstellt.

8. Verfahren nach einem der vorangegangenen Ansprüche, bei dem eine Aufnahme eines zu einer Anlagenkomponente (4) gehörigen Zertifikats in das computerimplementierte Komponenteninventar (3) eine relevante Änderung darstellt.

9. Verfahren nach einem der vorangegangenen Ansprüche, bei dem eine Aktualisierung oder eine Revokation eines zu einer Anlagenkomponente (4) gehörigen Zertifikats in dem computerimplementierten Komponenteninventar (3) eine relevante Änderung darstellt.

10. Verfahren nach einem der vorangegangenen Ansprüche, bei dem die Instanz (7, 8, 9), an die die Meldung versendet wird, in den festgelegten Regeln enthalten ist.

11. Verfahren nach einem der vorangegangenen Ansprüche, bei dem die Instanz (7, 8 ,9) als ein IAM- oder ein SIEM-System, oder als ein IAM- oder ein SIEM-Dienst ausgebildet ist.

12. Verfahren nach einem der vorangegangenen Ansprüche, bei dem die Regeln bestimmen, welchen Inhalt und/oder welches Format die Meldung aufweist.

13. Verfahren nach einem der vorangegangenen Ansprüche, bei dem die Regeln bestimmen, welche Schnittstelle und/oder welches Kommunikationsprotokoll im Rahmen der Versendung der Meldung verwendet werden.

14. System, umfassend:
- ein erster Teil, der dazu ausgebildet ist, ein Komponenteninventar (3) für eine technischen Anlage, wobei in dem computerimplementierten Komponenteninventar (3) Informationen über Anlagenkomponenten (4) der technischen Anlage hinterlegt sind, hinsichtlich eines Auftretens einer Änderung zu überwachen,
- ein zweiter Teil, der dazu ausgebildet ist, in Abhängigkeit von zuvor festgelegten und in einem Regelspeicher (1) hinterlegten Regeln, zu bewerten, ob die Änderung relevant ist,
- ein dritter Teil, der dazu ausgebildet ist, für den Fall, dass die Änderung von dem zweiten Teil als relevant bewertet wurde, wenigstens eine Meldung zu erzeugen,
- ein vierter Teil, der dazu ausgebildet ist, die Meldung an eine, von dem computerimplementierten Komponenteninventar (3) verschiedene Instanz (7, 8, 9) zu versenden.

15. Computerimplementiertes Komponenteninventar (3) für eine technische Anlage mit einem System gemäß Anspruch 14.
